# EUROPEAN PATENT SPECIFICATION

(11) **EP 3 767 150 B1**
(45) Date of publication and mention of the grant of the patent: **02.12.2026**
(21) Application number: 19186926.2
(22) Date of filing: 18.07.2019
(51) Int. Cl.: F16L 57/04, F16L 59/14, F16L 59/02

(54) **A SYSTEM COMPRISING A PIPE AND AN INSULATING AND PROTECTING ELEMENT AND INSULATING AND PROTECTING ELEMENT**
SYSTEM MIT EINEM ROHR UND EINEM ISOLIER- UND SCHUTZELEMENT SOWIE ISOLIER- UND SCHUTZELEMENT
SYSTÈME COMPRENANT UN TUYAU ET UN ÉLÉMENT D'ISOLATION ET DE PROTECTION ET ÉLÉMENT D'ISOLATION ET DE PROTECTION

(43) Date of publication of application: 20.01.2021
(73) Proprietor: ROCKWOOL A/S, 2640 Hedehusene (DK)
(72) Inventor: REICHINGER, Stephan-Ferdinand, 45359 Essen (DE)
(74) Representative: Brinkmann & Partner

(56) References cited:
- EP-A1- 1 522 800
- EP-A1- 1 848 915
- EP-A2- 0 304 909
- CN-A- 106 321 992
- DE-A1- 3 302 889
- DE-U1- 8 429 277
- GB-A- 2 085 140
- US-A1- 2005 166 539

## Description

The invention relates to an insulating and protecting element providing a passive fire protection against fire for a pipe consisting of at least an outer layer and an inner layer, both layers having different heat insulating and heat storing properties and to a system comprising a pipe, preferably for compressed air, and an insulating and protecting element surrounding the pipe and providing a passive fire protection against a fire, like hydro carbon pool or jet fire, tunnel fire, cellulosic fire, etc., and consisting of at least two layers having different heat insulating and heat storing properties..

Pipe sections comprising mineral wool as an insulating layer have proven to have good insulating properties as well as good resistance against fire. The last property is important when pipe sections are used for fire protecting pipes conveying a flammable liquid, sprinkler pipes, circular ventilation ducts, or to protect circular constructional steel members, hangers for ventilation ducts or sprinkler pipes, or when pipes penetrate vertical or horizontal fire rated partition walls.

Generally, the resistance against fire is increased when the thickness of the insulating layer is increased. Thus, when a structure such as a circular constructional steel member or a pipe conveying a flammable liquid is to be fire protected, the thickness of the insulating layer must be adjusted in such manner that it prevents the structure from being exposed to a critical temperature for a desired time. Traditionally, this is accomplished by simply using thicker heat insulating pipe sections for higher fire rated structures. However, often it is desirable to use as thin insulting layer as possible in order to minimize the bulkiness of the structure. There is therefore a desire to reduce the diameter of the pipe section, but maintaining the good fire protecting properties.

WO 2008/025529 A1 describes a heat insulating pipe section comprising a tubular insulating element having an outer surface and an inner surface and an insulating material comprising mineral wool, such as glass wool, stone wool or slag wool, arranged between the outer surface and the inner surface, wherein the insulating material has an annular outer section extending inwardly from the outer surface, an annular inner section extending outwardly from the inner surface and an annular core section between the annular outer section and the annular inner section and a particulate fire retarding material is present in the mineral wool. The concentration of the particulate fire retarding material in the mineral wool is higher in one or two sections selected from the annular outer section and the annular inner section and the annular core section, than in the other sections or section. This well-known pipe section can be used for typical fire cases but there is still the need to have a system comprising a pipe, preferably for compressed air, and an insulating and protecting element surrounding the pipe and providing a passive fire protection against fire like hydro carbon pool or jet fire, tunnel fire, cellulosic fire, etc. In this case a loss of containment in any portion of the piping system may result in a high temperature, high heat flux, high velocity flame, frequently termed a "jet fire". In case of a jet fire extreme heat flux densities may occur together with high temperatures, depending on the nature of the fire. In the case of a fire involving the combustion of combustible solid materials (unlikely in most hydro carbon processing operations), the temperature of the fire increases continuously and can be at 900°C after 60 minutes, about 1,050 °C after 120 minutes, and up to 1,150 °C after 240 minutes. The heat flux density can reach up to 100 kW/m². By comparison in hydro carbon pool fires, the temperature rise can be more rapid and a temperature of 1,150 °C can be reached after 20 minutes and with a heat flux density of 225 kW/m². With a jet fire when natural gas and different condensates burn under high pressure, temperature can rise to 1,300 up to 1,400 °C in a matter of seconds, with a heat flux density going up to 500 kW/m².

There is still a continuing need for improved fire resistant properties of passive fire protection systems, in particular for equipment handling petroleum products or other gaseous highly flammable products.

US 2010/0266781 describes a method for providing fire-resistant protection for a structural component for use in systems containing corrosive petroleum products. This structural component comprises a structural layer having a first surface and a second surface opposite to the first surface. According to this prior art to the first surface a material selected from the group consisting of ceramics, amorphous metals, and combinations thereof is applied thereby forming a corrosion resistant layer for contact with the corrosive petroleum products. Furthermore, to the second surface a sufficient amount of fire resistive material having a thermal conductivity of less than 0.4 W/mK is applied for a fire resistive coating layer with a sufficient thickness for the structural component to meet level II fire endurance standard according to IMO A 18-RES.753 fire testing protocol.

This prior art already describes different layouts of fire resistive layers on a pipe.

The DE 84 29 227 reverts to a chimney made of several shells. The chimney has an inner tube and an outer casing of which the inner tube is made of fire clay as a typical material for inner tubes of chimneys being heat and fire resistant but not being part of an insulation element. The inner tube is the part to be insulated. The outer casing is made of clay or concrete and of course not part of the insulation element.

The inner tube has a circular cross section whereas the outer casing has a rectangular cross section showing an interior space of mainly rectangular cross section into which the inner tube is inserted. An annular space between the outer surface of the inner tube and the inner surface of the outer casing is used to insert a layer of insulation material made of mineral fibers. The layer of insulation material follows the outer surface of the inner tube and is in contact with the outer surface of the tube. Nevertheless, layer is made from a single element having not more than one layer.

It is an object of the invention to provide an insulating and protecting element and a system that has improved fire protection properties compared to conventional pipe sections and can be used for pipes, preferably for compressed air, in cases of a hydro carbon fire.

This object is achieved by providing an insulating and protecting element as stated in claim 1. The insulating and protecting element according to the invention provides a passive fire protection against fire, like hydro carbon pool or jet fire, tunnel fire, cellulosic fire, for a pipe, consisting of at least an outer layer and an inner layer, both layers having different heat insulating and heat storing properties, whereby the outer layer has higher heat insulating properties than the inner layer suitable for being in contact with an outer surface of a pipe, whereby the inner layer has higher heat storing properties than the outer layer, whereby the outer layer comprises inorganic fibers, preferably stone wool fibers, and whereby the inner layer has a specific heat capacity Cₚ of at least 0.85 kJ/(kgK).

The inner layer of such an insulating and protecting element is preferably made from e. g. concrete, magnesite, Sorel cement, gypsum or concrete containing magnesium hydroxide or aluminum hydroxide.

Furthermore, the inner layer may have a smaller wall thickness than the outer layer. This has advantages to the weight of the insulating and protecting element as the inner layer made of the before-mentioned materials has obviously a higher density than the outer layer. To produce such insulating and protecting elements will be done in more or less long sections and to reduce the weight of one section means to be able to produce longer sections which can be handled by one person without technical equipment to raise or to lower and/or to fix the section to the pipe.

Preferably, the inner layer of the insulating and protecting element is connected to the outer layer by a heat resistant adhesive, especially by water glass.

Preferably, the insulating and protecting element is divided into at least two parts, each having corresponding surfaces onto which a connecting device, especially an adhesive, preferably water glass, can be applied so that the parts can easily be placed onto a pipe and connected to each other.

The elements are preferably identically shaped in cross section and/or longitudinal section which simplifies the mounting of the insulating and protecting element.

The insulating and protecting element according to the invention forms a system with a pipe. The insulating and protecting element consists of at least two layers having different heat insulating and heat storing properties (specific heat capacity Cₚ), whereby the outer layer has higher heat insulating properties than the inner layer being in contact with an outer surface of the pipe, whereby the inner layer has higher heat storing properties than the outer layer, whereby the outer layer comprises inorganic fibres, preferably stone wool fibers, and whereby the inner layer has a specific heat capacity Cₚ of at least 0.85 kJ/(kgK).

Such a system can be used for fire protection of e. g. compressed air pipelines and contains an inner layer of non-combustible, high-density material and an outer layer of a non-combustible insulating layer which together are an insulating and protecting element surrounding the pipe and providing a passive fire protection against i. a. a hydro carbon fire.

According to a further embodiment of the invention the inner layer is preferably made of a material with a density of at least 1000 kg/m³ and/or of concrete, magnesite, Sorel cement, gypsum or concrete containing magnesium hydroxide or aluminum hydroxide. The inner layer increases the heat capacity of the whole system and reduces the speed of the temperature increase of the protected pipe. The outer layer comprising inorganic fibers and especially made of stone wool fibers reduces the heat increase of the first layer. In case of a critical temperature below 100°C, concrete will be the most cost-efficient solution. In case of critical temperatures above 100°C gypsum could be a good solution as it will release water at temperatures above 100°C which will cool the system for a certain time.

Preferably, the inner layer made of concrete or the like has a thickness of e. g. 30 mm in combination with the outer layer made of a mandrel wound outer layer of mineral fibers of e. g. 60 mm thickness. Such a combination means that the inner layer has a smaller wall thickness compared to the outer layer. Such an insulating and protecting element can perfectly be used for pipes of 15 up to 25 mm diameter. With such an insulating and protecting element it can be expected that for the needed pipe dimensions, the critical temperature of 65°C at the pipe will be reached after more than 30 minutes after start of a hydro carbon pool fire. The solid, heavy internal layer decreases the Hp/A-value down to i.e. 33 m⁻¹ which significantly reduces the speed of temperature increase of the pipe. Preferably such system comprises a pipe with an outer diameter of 15 mm. For thinner pipes, an additional layer of mineral wool could be glued with water glass into the inner layer of the insulating and protecting element surrounding the pipe. Such an additional layer of mineral wool is of advantage as such an additional layer increases the resistance against the heat ingress into the pipe from the inner layer made of for example concrete to the pipe. Alternatively, water glass can be used as glue and space filler between the pipe and the insulating and protecting element in case of pipes with smaller diameters.

A heat resistance adhesive can be present to connect the inner layer to the outer layer. Preferably, water glass is used as heat resistant adhesive.

According to a further embodiment of the invention the element surrounding the pipe is divided into at least two parts, each having corresponding surfaces onto which a connecting device, especially an adhesive, preferably water glass can be applied. Such a division of the element surrounding the pipe simplifies the assembling of the components of the system. Of course, the element surrounding the pipe can be divided in more than two parts whereby all parts together build up the element. Of course, all parts of the elements can be connected to each other by a mesh surrounding the element. The mesh can be fixed additionally to the parts of the element.

Preferably, the parts of the element are identical in cross section and/or longitudinal section so that these parts can be used without a specific orientation or arrangement on the pipe.

It is of advantage to use an outer layer made from mineral wool fibers and a binding agent having a bulk density of at least 80 kg/m³. Such an outer layer gives on the one hand sufficient heat insulating properties to protect the inner layer against the impact of heat. On the other hand, such an insulation element has a flexibility to be bent easily and thereby to be adjustable and fixed to the pipe of circular cross section.

Accordingly, it is still a further aspect of the invention to arrange a metal foil, especially made from aluminum, on the outer surface of the pipe to prevent the contact of the adhesive used for the connection of the parts of the element with the pipe. This embodiment has the advantage that the element can easily be removed from the pipe in case the element is damaged or has to be removed of maintenance reasons or the like. Preferably, the element has a circular cross section like a pipe section and is therefore preformed for the use with respect to pipes.

To reduce the risk of corrosion of the pipe, a corrosion protection like a well-known coating system can be applied on the pipe before the insulating and protecting element is mounted on the pipe.

Finally, in a second embodiment the insulating and protecting element is made from boards with two large surfaces being arranged parallel and being connected to each other by side faces whereby each board has connecting areas on at least one large surface to which a second board can be connected via a side face. Such an embodiment can be used with pipes/conduits having for example a rectangular cross section so that the boards can be separately connected to the conduit and are connected in the area of the connecting areas building up an element of rectangular cross section.

The invention will be described in the following with reference to the drawings in which
Fig. 1 shows a first embodiment of a system comprising a pipe section and an insulating and protecting element in a cross-sectional view;
Fig. 2 shows a second embodiment of the system according to claim 1 in a cross-sectional view; and
Fig. 3 shows a third embodiment of a system according to figures 1 and 2 in a cross-sectional view.

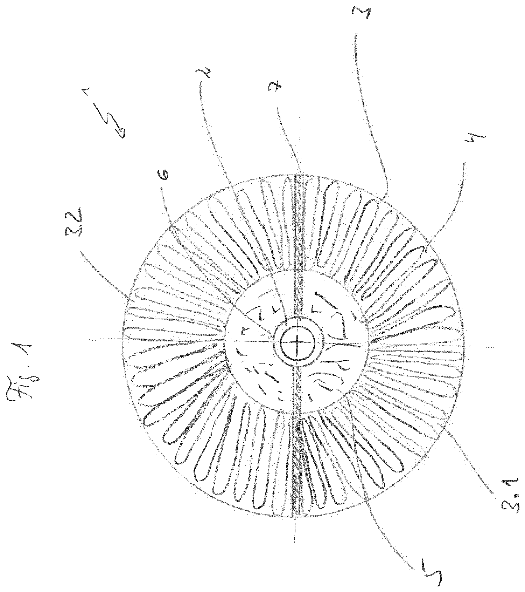

Fig. 1 shows a first embodiment of a system 1 comprising a pipe 2 for compressed air and an insulating and protecting element 3 surrounding the pipe 2 and providing a passive fire protecting against fire, like hydro carbon pool or jet fire, tunnel fire, cellulosic fire, etc. The insulating and protecting element 3 consists of two layers 4 and 5 having different heat insulating and heat storing properties. A first outer layer 4 has compared to the second inner layer 5 higher heat insulating properties which has the effect that heat arising from a fire is not directly transmitted to the inner layer 5.

The outer layer 4 is made from mineral fibers, namely stone wool fibers connected by a binder.

The inner layer 5 is in contact with an outer surface 6 of the pipe section 2 and has a specific heat capacity Cₚ of at least 0.85 kJ/(kg.K) which is higher than the specific heat capacity Cₚ of the outer layer 4.

In a preferred embodiment the inner layer 5 is made from gypsum which has the advantage that the inner layer 5 can easily be cut by using a saw. Furthermore, a second important advantage of gypsum as material for the inner layer 5 is that gypsum can release water if it is heated up above a certain temperature. The released water can be used to cool down the system 1 for a certain time period.

From Fig. 1 it can be seen that the wall thickness of the outer layer 4 is higher than the wall thickness of the inner layer 5.

Furthermore, it can be seen from Fig. 1 that the insulating and protecting element 3 is divided into two halves 3.1 and 3.2. These halves 3.1 and 3.2 can be easily mounted on the pipe 2 whereby the halves 3.1 and 3.2 are connected via an adhesive 7 made from water glass. The same adhesive 7, water glass, can be used for the connection of the two layers 4, 5 so that each half 3.1, 3.2 of the insulating and protecting element 3 is formed as a single piece which can be mounted on the pipe 2.

The outer layer 4 made of mineral wool, namely stone wool, preferably has a bulk density of at least 80 kg/m³, but it may be higher, such as 120 kg/m³ or 150 kg/m³ or even 190 kg/m³.

To avoid a direct contact of the adhesive 7 with the outer surface 6 of the pipe 2 an aluminum foil (not shown) may be provided on the outer surface 6 of the pipe. Avoiding the direct contact of the adhesive 7 with the outer surface 6 of the pipe 2 has the advantage that in case of damages of the system 1 the insulating and protecting element 3 can easily be removed from the pipe 2 without leaving parts like residues of the insulating and protecting element 3 on the outer surface of the pipe 2 which means that there is no more work for removing of these residues and cleaning of the pipe 2. A fast repair of a damaged system 1 is therefore possible.

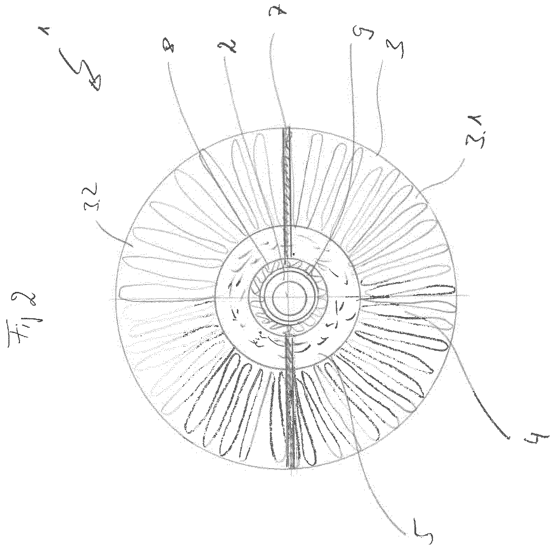

In Fig. 2 a second embodiment of the system 1 is shown whereby this second embodiment differs from the first embodiment according to Fig. 1 in that a third layer 8 made from mineral wool is arranged on an aluminum foil 9 surrounding the pipe 2. Such a system 1 can especially be used with pipes 2 for compressed air with a small diameter as the third layer 8 can be inserted into the cavity of the insulating and protecting element 3 to allow the use of the insulating and protecting element 3 even in case of different sizes of the diameter of the pipe 2.

On the one hand the third layer 8 can easily be arranged around the pipe 2 before the insulating and protecting element 3 is arranged on the outside surface of the layer 8. On the other hand, it is possible that the layer 8 is already an integral part of the insulating and protecting element 3 and made from mineral wool with low bulk density as such a mineral wool is compressible and therefore easy to deform as to achieve a tight arrangement of the layer 8 within the gap between the outer surface 6 of the pipe section 2 on the one hand and on the inner surface of the insulating and protecting element 3 on the other hand.

The insulating and protecting element 3 is made from at least two layers 4 and 5. The outer layer 4 can be produced from a mineral fiber insulation element wound around a mandrel. After removing the mandrel the insulation element contains the cavity and is cut into two halves 3.1 and 3.2. before the material forming the inner layer 5 is inserted into the cavity thereby forming a smaller cavity which has approximately a diameter similar to the outer diameter of the pipe section 2. Differences between the two diameters can be equalized by using the third layer 8. Preferably, the insulating and protecting element 3 is used for pipes 2 with an outer diameter of 15 mm. For thinner pipes 2 the additional layer 8 of mineral wool is of advantage. This third layer 8 can be glued into the cavity of the insulating and protecting element 3 by using water glass. The additional layer 8 increases the resistance against the heat ingress into the pipe from the inner layer 5 to the pipe 2. Alternatively, water glass can be used as an adhesive and space filler between the pipe 2 and the insulating and protecting element 3 in case of smaller pipes.

The thickness of the inner and outer layers 5,4 may be adapted to the specific purpose depending on the needed fire resistance time. For example, the inner layer 5 may have a thickness of 30 mm and the outer layer 4 may have a thickness of 60 mm and the insulating and protecting element 3 with such layers 4, 5 is used for a pipe 2 with a diameter of 15 mm. It can be expected from such an insulating and protecting element 3 that for the pipe 2 with the before-mentioned dimensions, the critical temperature of 65 °C at the pipe 2 will be reached after more than 30 minutes after start of a hydro carbon pool fire. The solid, heavy internal layer 5 decreases the Hp/A-value down to e. g. 33 m⁻¹ which significantly reduces the speed of the temperature increase of the pipe.

In case of critical temperatures below 100 °C the inner layer 5 is preferably made from concrete which is cost-efficient. In case of critical temperatures above 100 °C gypsum would be a smart solution as it will release water at temperatures above 100 °C, which will cool the system 1 for a certain time.

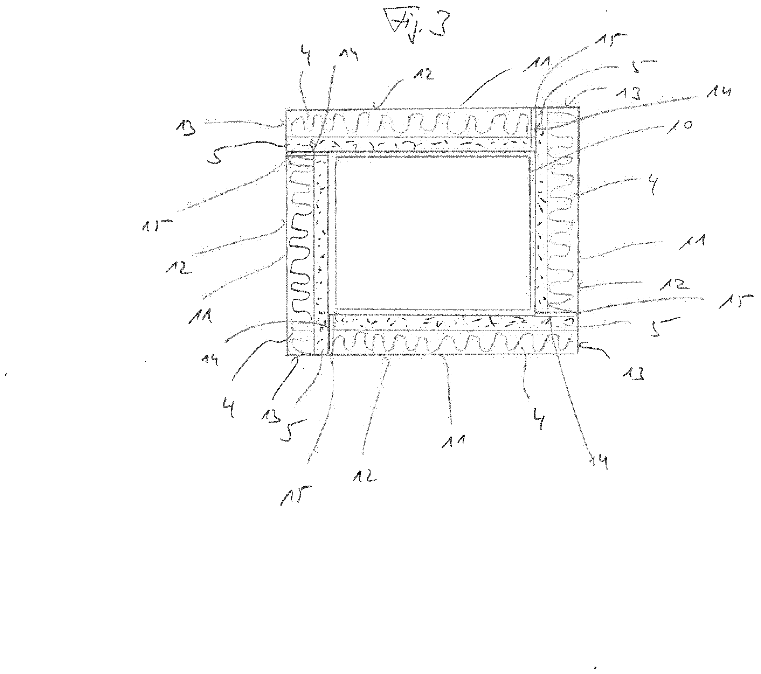

The invention can also be used for air ducts or valve boxes with rectangular cross section as shown in Fig. 3.

In Fig. 3 the system 1 contains an air duct 10 which of course is equivalent to the pipe 2. The air duct 10 is connected at its outer surfaces to boards 11. Each board 11 has two layers 4, 5 which are build up from the materials as being described with respect to the embodiments of figures 1 and 2.

Each board has two large surfaces 12 and side faces 13 which are arranged perpendicular to the large surfaces 12.

Each board 11 has a connecting area 14 on one large surface 12 which is connected to a side face 13 of a second board 11. For the connection of the boards 11 an adhesive 15 is used, e. g. water glass.

Above the interconnection of pipe section halves 3.1 and 3.2 or boards 11 are made with an adhesive, such as water glass. A dry/mechanical fixing is also possible using a non-combustible material, such as stainless-steel metal bands or screws adapted for this purpose. If needed, an intumescent material can be used in combination with such a dry/mechanical fixing to close all gaps in case of fire.

## Claims

1. Insulating and protecting element providing a passive fire protection against a fire, like hydro carbon pool or jet fire, tunnel fire, cellulosic fire, for a pipe, consisting of at least an outer layer (4) and an inner layer (5), both layers (4, 5) having different heat insulating and heat storing properties, **characterized in that** the outer layer (4) has higher heat insulating properties than the inner layer (5) suitable for being in contact with an outer surface of a pipe (2), **in that** the inner layer has higher heat storing properties than the outer layer (4), **in that** the outer layer (4) comprises inorganic fibers, preferably stone wool fibers and **in that** the inner layer has a specific heat capacity Cₚ of at least 0.85 kJ/(kg. K).

2. Insulating and protecting element according to claim 1,
**characterized in that**
the inner layer (5) is made of a material with a density of at least 1000 kg/m³ and/or of concrete, magnesite, Sorel cement, gypsum or concrete containing magnesium hydroxide or aluminum hydroxide.

3. Insulating and protecting element according to claim 1 or claim 2,
**characterized in that**
the inner layer (5) has a smaller wall thickness than the outer layer (4).

4. Insulating and protecting element according to any of the preceding claims 1 to 3, **characterized in that**
the inner layer (5) is connected to the outer layer (4) by a heat resistant adhesive, especially by water glass.

5. Insulating and protecting element according to any of the preceding claims 1 to 4, **characterized by**
at least two parts, each having corresponding surfaces onto which a connecting device, especially an adhesive, preferably water glass can be applied.

6. Insulating and protecting element according to claim 5,
**characterized in that**
the parts are identically shaped in cross section and/or longitudinal section.

7. Insulating and protecting element according to any of the preceding claims 1 to 6,
**characterized in that**
the outer layer (4) is made from mineral wool fibers and a binding agent together having a bulk density of at least 80 kg/m³ up to 190 kg/m³.

8. Insulating and protecting element according to any of the preceding claims 1 to 7,
**characterized by**
boards (11) with two large surfaces (12) being arranged parallel and being connected to each other by side faces (13) whereby each board (11) has connecting areas (14) on at least one large surface (12) to which a second board (11) can be connected via a side face (13).

9. System comprising a pipe (2), preferably for compressed air, and an insulating and protecting element (3) according to claim 1 to 8, surrounding the pipe (2).

10. System according to claim 9,
**characterized in that**
the inner layer (5) is made of a material with a density of at least 1000 kg/m³ and/or of concrete, magnesite, Sorel cement, gypsum or concrete containing magnesium hydroxide or aluminum hydroxide.

11. System according to claim 9 or claim 10,
**characterized in that**
the inner layer (5) has a smaller wall thickness than the outer layer (4).

12. System according to any of the preceding claims 9 to 11,
**characterized in that**
the inner layer (5) is connected to the outer layer (4) by a heat resistant adhesive, especially by water glass.

13. System according to any of the preceding claims 9 to 12,
**characterized in that**
the element (3) surrounding the pipe (2) is divided into at least two parts, each having corresponding surfaces onto which a connecting device, especially an adhesive, preferably water glass, can be applied.

14. System according to claim 13,
**characterized in that**
the parts of the element (3) are identically shaped in cross section and/or longitudinal section.

15. System according to any of the preceding claims 9 to 14,
**characterized in that**
the outer layer (4) is made from mineral wool fibers and a binding agent, together having a bulk density of at least 80 kg/m³ up to 190 kg/m³.

16. System according to any of the preceding claims 9 to 15,
**characterized in that**
a metal foil (9), especially made from aluminum, is arranged on the outer surface of the pipe (2) to prevent the contact of the adhesive used for the connection of the parts of the element with the pipe (2).

17. System according to any of the preceding claims 9 to 16
**characterized in that**
the element (3) has a circular cross section.

18. System according to any of the preceding claims 9 to 16,
**characterized in that**
the element is made from boards (11) with two large surfaces (12) being arranged parallel and being connected to each other by side faces (13) whereby each board (11) has connecting areas on at least one large surface (12) to which a second board (11) can be connected via a side face (13).

## Patentansprüche

1. Isolier- und Schutzelement zur Bereitstellung eines passiven Brandschutzes gegen einen Brand wie Kohlenwasserstoff-Poolfeuer, Düsen-/Strahlfeuer, Tunnelbrand, Zellulosebrand, für ein Rohr, das Isolier- und Schutzelement bestehend aus mindestens einer Außenschicht (4) und einer Innenschicht (5), wobei beide Schichten (4, 5) unterschiedliche Wärmedämm- und Wärmespeichereigenschaften aufweisen, **dadurch gekennzeichnet, dass** die Außenschicht (4) bessere Wärmedämmeigenschaften aufweist als die Innenschicht (5), die geeignet sind für den Kontakt mit einer Außenfläche eines Rohres (2), dass die Innenschicht über bessere Wärmespeichereigenschaften verfügt als die die Außenschicht (4), dass die Außenschicht (4) anorganische Fasern umfasst, bevorzugt Steinwollefasern, und dass die Innenschicht eine spezifische Wärmekapazität Cₚ von mindestens 0,85 kJ (kg.K) aufweist.

2. Isolier- und Schutzelement nach Anspruch 1,
**dadurch gekennzeichnet, dass**
die Innenschicht (5) aus einem Material mit einer Dichte von mindestens 1000 kg/m³ und/oder aus Beton, Magnesit, Sorelzement oder Magnesiumhydroxid oder Aluminiumhydroxid enthaltendem Gips oder Beton besteht.

3. Isolier- und Schutzelement nach Anspruch 1 oder Anspruch 2,
**dadurch gekennzeichnet, dass**
die Innenschicht (5) eine geringere Wanddicke aufweist als die Außenschicht (4).

4. Isolier- und Schutzelement nach einem der vorangehenden Ansprüche 1 bis 3,
**dadurch gekennzeichnet, dass**
die Innenschicht (5) durch einen hitzebeständigen Klebstoff, insbesondere durch Wasserglas, mit der Außenschicht (4) verbunden ist.

5. Isolier- und Schutzelement gemäß einem der vorangehenden Ansprüche 1 bis 4,
**gekennzeichnet durch**
mindestens zwei Teile, deren jedes entsprechende Flächen aufweist, auf die ein Verbindungsmittel, speziell ein Klebstoff, bevorzugt Wasserglas, aufgetragen werden kann.

6. Isolier- und Schutzelement nach Anspruch 5,
**dadurch gekennzeichnet, dass**
die Teile im Querschnitt und/oder Längsschnitt identisch geformt sind.

7. Isolier- und Schutzelement nach einem der vorangehenden Ansprüche 1 bis 6,
**dadurch gekennzeichnet, dass**
die Außenschicht (4) aus Mineralwollefasern und einem Bindemittel besteht, die zusammen eine Rohdichte von mindestens 80 kg/m³ bis 190 kg/m³ aufweisen.

8. Isolier- und Schutzelement nach einem der vorangehenden Ansprüche 1 bis 7,
**gekennzeichnet durch**
Platten (11) mit zwei großen Oberflächen (12), die parallel angeordnet und durch Seitenflächen (13) miteinander verbunden sind, wobei jede Platte (11) an mindestens einer großen Oberfläche (12) Verbindungsbereiche (14) hat, mit denen eine zweite Platte (11) über eine Seitenfläche (13) verbunden werden kann.

9. System, umfassend ein Rohr (2), vorzugsweise für Druckluft, sowie ein das Rohr (2) umschließendes Isolier- und Schutzelement (3) gemäß einem der Ansprüche 1 bis 8.

10. System nach Anspruch 9,
**dadurch gekennzeichnet, dass**
die Innenschicht (5) aus einem Material mit einer Dichte von mindestens 1000 kg/m³ und/oder aus Beton, Magnesit, Sorelzement oder Magnesiumhydroxid oder Aluminiumhydroxid enthaltendem Gips oder Beton besteht.

11. System nach Anspruch 9 oder 10,
**dadurch gekennzeichnet, dass**
die Innenschicht (5) eine geringer Wanddicke aufweist als die Außenschicht (4).

12. System nach einem der vorangehenden Ansprüche 9 bis 11,
**dadurch gekennzeichnet, dass** die Innenschicht (5) durch einen hitzebeständigen Klebstoff, insbesondere durch Wasserglas, mit der Außenschicht (4) verbunden ist.

13. System nach einem der vorangehenden Ansprüche 9 bis 12,
**dadurch gekennzeichnet, dass**
das das Rohr (2) umschließende Element (3) in mindestens zwei Teile unterteilt ist, deren jedes entsprechende Flächen aufweist, auf die ein Verbindungsmittel, speziell ein Klebstoff, bevorzugt Wasserglas, aufgetragen werden kann.

14. System nach Anspruch 13,
**dadurch gekennzeichnet, dass**
die Teile des Elements (3) im Querschnitt und/oder Längsschnitt identisch geformt sind.

15. System nach einem der vorangehenden Ansprüche 9 bis 14,
**dadurch gekennzeichnet, dass**
die Außenschicht (4) aus Mineralwollefasern und einem Bindemittel besteht, die zusammen eine Rohdichte von mindestens 80 kg/m³ bis 190 kg/m³ aufweisen.

16. System nach einem der vorangehenden Ansprüche 9 bis 15,
**dadurch gekennzeichnet, dass**
eine Metallfolie (9), speziell aus Aluminium, an der Außenfläche des Rohres (2) angeordnet ist, um den Kontakt des Klebstoffs zu verhindern, der zur Verbindung der Teile des Elements mit dem Rohr (2) verwendet wird.

17. System nach einem der vorangehenden Ansprüche 9 bis 16,
**dadurch gekennzeichnet, dass**
das Element (3) einen kreisförmigen Querschnitt hat.

18. System nach einem der vorangehenden Ansprüche 9 bis 16,
**dadurch gekennzeichnet, dass**
das Element aus Platten (11) besteht, wobei zwei große Oberflächen parallel angeordnet und durch Seitenflächen (13) miteinander verbunden sind, wobei jede Platte (11) Verbindungsbereiche (14) an mindestens einer großen Oberfläche (12) hat, mit der eine zweite Platte (11) über eine Seitenfläche (13) verbunden werden kann.

## Revendications

1. Élément d'isolation et de protection destiné à assurer une protection passive contre les incendies, tels que les feux de napes d'hydrocarbures, les feux de jet, les incendies de tunnel et les feux de cellulose, pour un tuyau, ledit élément d'isolation et de protection étant constitué d'au moins une couche extérieure (4) et d'une couche intérieure (5), les deux couches (4, 5) présentant des propriétés d'isolation thermique et d'accumulation de chaleur différentes, **caractérisé en ce que** la couche extérieure (4) présente de meilleures propriétés d'isolation thermique que la couche intérieure (5), appropriées pour le contact avec une surface extérieure d'un tuyau (2), que la couche intérieure présente de meilleures propriétés d'accumulation de chaleur que la couche externe (4), que la couche externe (4) comprend des fibres inorganiques, de préférence des fibres de laine de roche, et que la couche interne présente une capacité thermique spécifique Cp d'au moins 0,85 kJ (kg.K).

2. Élément d'isolation et de protection selon la revendication 1,
**caractérisé en ce que**
la couche intérieure (5) est constituée d'un matériau ayant une densité d'au moins 1 000 kg/m³ et/ou de béton, de magnésite, de ciment Sorel ou de plâtre ou de béton contenant de l'hydroxyde de magnésium ou de l'hydroxyde d'aluminium.

3. Élément d'isolation et de protection selon la revendication 1 ou 2,
**caractérisé en ce que**
la couche intérieure (5) présente une épaisseur de paroi inférieure à celle de la couche extérieure (4).

4. Élément d'isolation et de protection selon l'une quelconque des revendications précédentes 1 à 3,
**caractérisé en ce que**
la couche intérieure (5) est reliée à la couche extérieure (4) par un adhésif résistant à la chaleur, en particulier par du verre soluble.

5. Élément d'isolation et de protection selon l'une quelconque des revendications 1 à 4 précédentes,
**caractérisé par**
au moins deux pièces, dont chacune présente des surfaces correspondantes sur lesquelles un agent de liaison, en particulier un adhésif, de préférence du verre soluble, peut être appliqué.

6. Élément d'isolation et de protection selon la revendication 5,
**caractérisé en ce que**
les pièces ont une forme identique en coupe transversale et/ou en coupe longitudinale.

7. Élément d'isolation et de protection selon l'une quelconque des revendications 1 à 6 précédentes,
**caractérisé en ce que**
la couche extérieure (4) est constituée de fibres de laine minérale et d'un liant, qui présentent ensemble une masse volumique apparente comprise entre au moins 80 kg/m³ et 190 kg/m³.

8. Élément d'isolation et de protection selon l'une quelconque des revendications précédentes 1 à 7,
**caractérisé par**
des panneaux (11) comportant deux grandes surfaces (12) disposées parallèlement et reliées entre elles par des faces latérales (13), chaque panneau (11) comportant des zones de raccordement (14) sur au moins une grande surface (12), auxquelles un deuxième panneau (11) peut être relié par l'intermédiaire d'une face latérale (13).

9. Système comprenant un tuyau (2), de préférence pour l'air comprimé, ainsi qu'un élément d'isolation et de protection (3) entourant le tuyau (2), selon l'une quelconque des revendications 1 à 8.

10. Système selon la revendication 9,
**caractérisé en ce que**
la couche intérieure (5) est constituée d'un matériau présentant une densité d'au moins 1 000 kg/m³ et/ou de béton, de magnésite, de ciment Sorel ou de plâtre ou de béton contenant de l'hydroxyde de magnésium ou de l'hydroxyde d'aluminium.

11. Système selon la revendication 9 ou 10,
**caractérisé en ce que**
la couche intérieure (5) présente une épaisseur de paroi inférieure à celle de la couche extérieure (4).

12. Système selon l'une quelconque des revendications précédentes 9 à 11, **caractérisé en ce que**
la couche intérieure (5) est reliée à la couche extérieure (4) par un adhésif résistant à la chaleur, en particulier par du verre soluble.

13. Système selon l'une quelconque des revendications précédentes 9 à 12, **caractérisé en ce que**
l'élément (3) entourant le tuyau (2) est divisé en au moins deux parties, dont chacune présente des surfaces correspondantes sur lesquelles un moyen de liaison, notamment un adhésif, de préférence du verre soluble, peut être appliqué.

14. Système selon la revendication 13,
**caractérisé en ce que**
les parties de l'élément (3) ont une forme identique en coupe transversale et/ou en coupe longitudinale.

15. Système selon l'une quelconque des revendications précédentes 9 à 14, **caractérisé en ce que**
la couche extérieure (4) est constituée de fibres de laine minérale et d'un liant, qui présentent ensemble une masse volumique apparente d'au moins 80 kg/m³ à 190 kg/m³.

16. Système selon l'une quelconque des revendications précédentes 9 à 15, **caractérisé en ce que**
une feuille métallique (9), notamment en aluminium, est disposée sur la surface extérieure du tuyau (2) afin d'empêcher le contact avec l'adhésif utilisé pour relier les parties de l'élément au tuyau (2).

17. Système selon l'une quelconque des revendications 9 à 16 précédentes, **caractérisé en ce que**
l'élément (3) présente une section transversale circulaire.

18. Système selon l'une quelconque des revendications 9 à 16 précédentes, **caractérisé en ce que**
l'élément est constitué de panneaux (11) comportant deux grandes surfaces (12) disposées parallèlement et reliées entre elles par des faces latérales (13), chaque panneau (11) comportant des zones de raccordement (14) sur au moins une grande surface (12), auxquelles un deuxième panneau (11) peut être relié par l'intermédiaire d'une face latérale (13).
